# EUROPÄISCHE PATENTSCHRIFT

(11) **EP 0 608 480 B1**
(45) Veröffentlichungstag und Bekanntmachung des Hinweises auf die Patenterteilung: **21.02.1996**
(21) Anmeldenummer: 93114795.3
(22) Anmeldetag: 15.09.1993
(51) Int. Cl.: F16F 15/03

(54) **Aktiver Schwingungstilger**
Oscillation damper
Amortisseur d'oscillations

(30) Priorität: 23.01.1993 DE 4301845
(43) Veröffentlichungstag der Anmeldung: 03.08.1994
(73) Patentinhaber: Firma Carl Freudenberg, D-69469 Weinheim (DE)
(72) Erfinder: Schilling, Hermann, Dr., D-69569 Weinheim (DE); Leibach, Markus, D-69502 Hemsbach (DE); Freudenberg, Ulrich, Dr., D-74889 Sinsheim (DE)

(56) Entgegenhaltungen:
- EP-A- 0 290 181
- DE-A- 3 314 335
- DE-A- 3 741 578
- FR-A- 2 669 981
- US-A- 4 083 433
- SOVIET INVENTIONS ILLUSTRATED Section PQ, Week 8650, 24. Dezember 1986 Derwent Publications Ltd., London, GB; Class Q63, AN 86-330604 & SU-A-1 222 933 (FER MET WORK SAFTY) 7. April 1986

## Beschreibung

Die Erfindung betrifft einen aktiven Schwingungstilger für ein in einer hin- und hergehenden Bewegung befindliches Maschinenteil, umfassend eine in Richtung der hin- und hergehenden Bewegung verschiebbare Trägheitsmasse, die eine tilgungswirksame Zusatzmasse bildet, sowie eine an dem Maschinenteil festlegbare Tragplatte, wobei die Trägheitsmasse und die Tragplatte durch ein Federelement miteinander verbunden sind.

Ein derartiger Schwingungstilger ist aus der vorangemeldeten und nach veröffentlichten EP-A-0 543 083 bekannt. Der Schwingungstilger ist einem schwingendem Körper aus magnetisierbarem Werkstoff zugeordnet, der einen magnetischen Rückschluß für einen Magnet bildet, durch den die Trägheitsmasse in Bewegung versetzbar ist. Der Magnet und der Körper sind in jedem Betriebszustand relativ zueinander beweglich. Der Magnet, der zumindest einen Teil der Tilgermasse bildet, begrenzt mit dem schwingenden Körper unter Zwischenschaltung des Federelements aus elastomerem Werkstoff einen Spalt, der sich im wesentlichen quer zur Richtung der eingeleiteten Schwingungen erstreckt. Der Aufbau dieses Schwingungstilgers ist in fertigungstechnischer und wirtschaftlicher Hinsicht besonders günstig, wobei jedoch zu beachten ist, daß sich der Spalt zwischen der Rückschlußplatte und dem Magnet während der bestimmungsgemäßen Verwendung stets verändert und daher zu schwer vorherbestimmbaren nicht-linearen Gebrauchseigenschaften des Tilgers führt.

Der Erfindung liegt die Aufgabe zugrunde, einen Schwingungstilger der zuvor beschriebenen Art derart weiterzuentwickeln, daß er ein weitgehend lineares Betriebsverhalten und einen einfachen Aufbau aufweist.

Diese Aufgabe wird erfindungsgemäß mit den Merkmalen von Anspruch 1 gelöst. Auf vorteilhafte Ausgestaltungen nehmen die Unteransprüche Bezug.

Bei dem erfindungsgemäßen Schwingungstilger ist es vorgesehen, daß die Eigenfrequenz des Schwingungssystems, das aus der Trägheitsmasse und dem Federelement gebildet ist, höchstens so groß ist, wie die Frequenz der hin- und hergehenden Bewegung, daß die Trägheitsmasse durch eine an der Tragplatte relativ unbeweglich festgelegte Tauchspule bewegbar ist, daß das Federelement durch die Tauchspule verformbar ist, daß die Trägheitsmasse durch einen Topfmagnet gebildet ist, der die Tauchspule radial innen und außen zumindest teilweise konzentrisch umschließt und daß der Topfmagnet durch eine Führung parallel zur Achse der Tauchspule geführt ist. Hierbei ist von Vorteil, daß bei Einleitung von Schwingungen durch die parallele Führung der relativ zueinander beweglichen Teile und einen Magnetspalt, der sich im wesentlichen parallel zur Bewegungsrichtung erstreckt, eine stets gleichbleibende Spaltbreite erhalten bleibt und der Schwingungstilger dadurch ein lineares Betriebsverhalten aufweist. Das Magnetfeld verläuft im Luftspalt radial und erzeugt damit keine statische Vorspannung auf die Federelemente in Richtung der vorgesehenen Bewegungsrichtung. Dadurch, daß das Federelement durch die statische Magnetkraft nicht statisch belastet ist, kommt es auch bei zunehmender Gebrauchsdauer nicht zu bleibenden Setzungen des Federmaterials. Der Schwingungstilger ermöglicht die eingeleiteten Schwingungen aktiv zu reduzieren. Der Schwingungstilger kann gezielt zu Schwingungen angeregt werden, um die Schwingungen im angrenzenden Bauteil hinsichtlich ihrer Frequenz und Schwingungsstärke in gewünschter Weise zu verändern. Der Topfmagnet, der aus einem Magnetgehäuse und einem Magnet besteht, bildet eine seismische Masse, die parallel zur Achse der Tauchspule beweglich ist. Bei Einleitung eines Wechselstroms in die Tauchspule wird eine Kraft zwischen dem Topfmagnet und der am Maschinenteil festgelegten Tragplatte erzeugt, die sich einerseits an der trägen Masse des Topfmagnets und andererseits an dem schwingenden Bauteil abstützt. Bei einer derartigen Ausgestaltung ist von hervorzuhebender Bedeutung, daß die Tauchspule durch keine separat angebrachte Halterung an dem schwingenden Bauteil befestigt werden muß. Um gute Gebrauchseigenschaften während einer langen Gebrauchsdauer zu erreichen und den aktiven, ansteuerbaren Schwingungstilger in verschiedenen Einbaulagen einsetzen zu können, ist zwischen der Tragplatte, die den Tauchspulenträger bildet und dem Topfmagnet eine elastische Aufhängung in Form des Federelements vorgesehen, die den Topfmagnet in einer definierten räumlichen Nullage hält. Die Führung führt den Topfmagnet in bezug auf die Tauchspule so, daß auch bei der Einwirkung von Querkräften auf den Topfmagnet keine unzulässige Reibung oder Krafteinwirkung zwischen dem Magnet und der Spule auftritt.

Gemäß einer vorteilhaften Ausgestaltung kann das Federelement aus einem elastomerem Werkstoff bestehen. Hierbei ist von Vorteil, daß der Aufbau des Schwingungstilgers teilearm und unkompliziert ist. In Abhängigkeit von der Trägheitsmasse des Topfmagneten und der zu tilgenden Schwingung kann die Federsteifigkeit des Federelements durch eine entsprechende Werkstoffauswahl beeinflußt werden. Bevorzugt weist das Federelement einen Verlustfaktor von 0,03 bis 0,2 auf. Der Verlustfaktor tan δ ist das Verhältnis zwischen Verlust- und Speichermodul des verwendeten Elastomerwerkstoffs.

Nach einer anderen Ausgestaltung kann das Federelement durch ein Luftpolster gebildet sein, das von der Tragplatte und dem Topfmagnet begrenzt ist. Hierbei ist von Vorteil, daß bei einer Abdichtung der relativ zueinander beweglichen Teile, die durch die Tragplatte und den Topfmagnet gebildet sind, Relaxationserscheinungen der Feder weitgehend verhindert werden können. Es ist allerdings darauf zu achten, daß die Abdichtung des Luftpolsters gegen die Umgebung zusätzliche Dichtungen bedingt.

Der Topfmagnet kann aus einem Magnet und einem Magnetgehäuse bestehen, wobei der Magnet relativ unbeweglich im Magnetgehäuse festgelegt ist. Das Magnetgehäuse und der Magnet sind als vormontierbare Einheit ausgebildet, wodurch die Montage des Schwingungstilgers deutlich vereinfacht wird. Der Schwingungstilger besteht dann im wesentlichen nur noch aus zwei Teilen, die durch den Topfmagnet und die Tragplatte gebildet sind, an der die Tauchspule befestigt ist.

Nach einer ersten Ausgestaltung kann der Magnet als permanent magnetisierter Ringmagnet ausgebildet und in radialer Richtung magnetisiert sein. Der Permanentmagnet und die Tauchspule sind relativ beweglich zueinander angeordnet. Während der bestimmungsgemäßen Verwendung erzeugt der Permanentmagnet einen sich radial über den Luftspalt erstreckenden Magnetfluß. Mit Hilfe der Tauchspule wird dem statischen Fluß ein veränderlicher Fluß überlagert, so daß im Luftspalt, der sich parallel zur Bewegungsrichtung der betriebsbedingt eingeleiteten Schwingungen erstreckt, ein Wechselanteil der Kraft entsteht. Diese Kraft stützt sich einerseits auf der Trägheitsmasse und andererseits auf dem zu bedämpfenden Maschinenteil ab. Der hierzu erforderliche Wechselstrom wird der Tauchspule aus einer Versorgungseinheit zugeführt, die beispielsweise unter Zuhilfenahme von Sensoren den zu dämpfenden Schwingungen entsprechend geregelt werden kann.

Nach einer davon abweichenden Ausgestaltung kann der Magnet durch einen in axialer Richtung magnetisierten Permanentmagnet gebildet sein, der vom Magnetgehäuse unter Bildung eines Luftspalts zumindest teilweise umschlossen ist, wobei das Magnetgehäuse aus zwei Magnetkörpern besteht, die dem Permanentmagnet in Richtung der Bewegung beiderseits benachbart zugeordnet sind. Die Magnetkörper können jeweils durch ein Federelement aus metallischem Werkstoff gebildet und mit einem sich in axialer Richtung erstreckenden, zylindrischen Vorsprung der Tragplatte elastisch nachgiebig verbunden sein, wobei der Vorsprung als Führungshülse ausgebildet ist und die Magnetkörper zu der Führungshülse relativ beweglich geführt sind. Eine derartige Ausgestaltung hat den Vorteil, daß wirtschaftlich besonders günstig herzustellende scheibenförmige Permanentmagnete verwendet werden können. Der Vorsprung kann beispielsweise mehrteilig ausgebildet sein, wobei die in axialer Richtung aneinander angrenzenden, hohlzylinderförmigen Ringelemente unter Zwischenschaltung der Federelemente miteinander verspannbar sind. Die Verwendung von zwei Federelementen zwischen dem Topfmagnet und der Führungshülse hat den Vorteil, daß eventuell betriebsbedingt auftretende radiale Belastungen von den Federelementen abgefangen werden. Die Federelemente aus metallischem Werkstoff können beispielsweise durch Metallmembranen gebildet sein, die eine besonders gute, reibungsfreie radiale Abstützung und axiale Führung ermöglichen. Eine Gleitführung zwischen Topfmagnet und Führungshülse ist dadurch entbehrlich.

Nach einer anderen Ausgestaltung kann der Magnet als Elektromagnet ausgebildet sein. Der Elektromagnet erzeugt durch einen Gleichstrom ein konstantes Magnetfeld im Ringspalt des Elektromagneten. Durch Veränderung des Gleichstroms kann die durch den in der Tauchspule fließenden Wechselstrom erzeugte dynamische Wechselkraft verändert und an die Schwingungsstärke des Maschinenteils angepaßt werden. Eine derartige Ausgestaltung bedingt eine außerordentlich gute Einstellbarkeit des Schwingungstilgers auf die jeweiligen Gegebenheiten des Anwendungsfalles.

Der Topfmagnet kann kreisringförmig und in sich geschlossen ausgebildet sein. Diese Ausgestaltung bedingt eine vergleichsweise kostengünstige Herstellbarkeit.

Nach einer anderen Ausgestaltung kann der Topfmagnet aus in Umfangsrichtung verteilten Segmenten bestehen. Der segmentierte Magnet ermöglicht eine große gestalterische Freiheit bei der Konstruktion des Tilgers. Dies hat für konkrete Anwendungen besondere Vorteile, in dem zum Beispiel die Führungsbolzen zwischen den Magnetsegmenten angebracht werden können, oder daß die Kabelführung zwischen die Magnetsegmente verlegt werden kann.

Hinsichtlich eines möglichst guten Ansprechverhaltens des Schwingungstilgers bei Strombeaufschlagung der Tauchspule ist die Führung bevorzugt relativ unbeweglich zur Tragplatte angeordnet wobei die Führung das Magnetgehäuse mit Gleitflächen anliegend berührt. Die Gleitflächen können beispielsweise durch eine Beschichtung aus gleitfähigem Werkstoff, beispielsweise PTFE, gebildet sein. Hierbei ist von Vorteil, daß der Magnettopf eine leichtgängige Beweglichkeit aufweist. Insbesondere bei Richtungsumkehr und dem Übergang von Haft- in Gleitreibung ist diese Ausgestaltung von Vorteil.

Die leichtgängige Beweglichkeit des Schwingungstilgers kann dadurch weiter begünstigt werden, daß die Führung durch zumindest zwei gleichmäßig in Umfangsrichtung verteilte Führungsbolzen gebildet ist, die von hohlzylinderförmigen Ausnehmungen des Magnetgehäuses, die sich parallel zur Achse der Tauchspule erstrecken, umschlossen sind. Die Führungsbolzen können beispielsweise im Bereich ihrer Oberfläche mit Schmiermitteltaschen versehen sein oder aus einem selbstschmierenden, polymeren Werkstoff bestehen. Durch die Führungsbolzen mit ihrer vergleichsweisen großen Erstreckung in Richtung der eingeleiteten Schwingungen, werden Verkantungserscheinungen der beiden relativ zueinander beweglichen Teile zuverlässig vermieden.

Zumindest eines der die Führung bildenden Teile kann mit einer reibungsverringernden Oberflächenbeschichtung versehen sein.

Nach einer anderen Ausgestaltung kann das Federelement als Führungs- und Dämpfungsbuchse ausgebildet sein und sich in radialer Richtung zwischen dem Magnetgehäuse und einem sich in axialer Richtung erstreckenden, hohlzylindrischen Vorsprung der Tragplatte angeordnet sein. Das Federelement bewirkt bei einer derartigen Ausgestaltung eine Dämpfung der Resonanzschwingungen des Schwingungstilgers und verhindert eine Anschlagberührung zwischen der Tragplatte und dem Topfmagnet bei Einleitung von Schwingungen mit großen Amplituden. Bei stoßartigen Belastungen, die die betriebsbedingten Schwingungen überlagern, ist diese Ausgestaltung ebenfalls von Vorteil.

Der Gegenstand der vorliegenden Erfindung wird nachfolgend anhand der als Anlage beigefügten Zeichnungen weiter verdeutlicht. Es zeigen:
- Fig. 1: ein erstes Ausführungsbeispiel des erfindungsgemäßen Schwingungstilgers, wobei der Magnet des Topfmagneten als Permanentmagnet ausgebildet ist.
- Fig. 2: ein zweites Ausführungsbeispiel, bei dem die Führung durch Führungsbolzen gebildet ist, die mit der Tragplatte verbunden sind.
- Fig. 3: ein drittes Ausführungsbeispiel, wobei sich der Federkörper in Richtung der eingeleiteten Schwingungen erstreckt und als Dämpfungsbuchse ausgebildet ist.
- Fig. 4: ein viertes Ausführungsbeispiel, bei dem der Federkörper durch ein Luftpolster gebildet ist.
- Fig. 5: ein fünftes Ausführungsbeispiel, bei dem die Federn durch zwei Metallmembranen und der Magnet als axialmagnetisierte Scheibe ausgeführt sind und der Magnetspalt mit Fluid gefüllt ist.

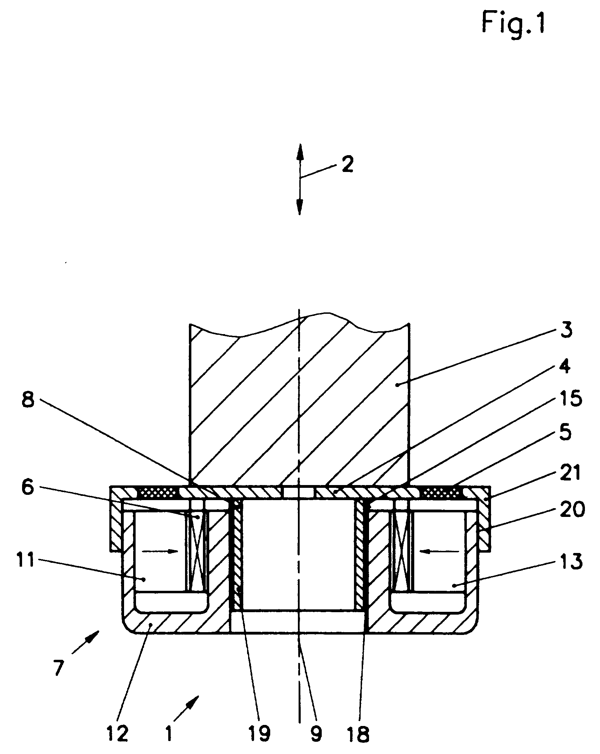

In den Fig. 1 bis 5 ist jeweils ein aktiver Schwingungstilger 1 gezeigt, der an einem hin- und herbewegbaren Maschinenteil 3 festgelegt ist. Der Schwingungstilger 1 umfaßt eine Tragplatte 4, die mit dem Maschinenteil 3 verbunden ist. In den hier dargestellten Ausführungsbeispielen sind das Maschinenteil 3 und die Tragplatte 4 miteinander verschraubt. Die Trägheitsmasse des Schwingungstilgers ist durch einen Topfmagnet 7 gebildet, wobei der Topfmagnet 7 einen Magnet 11 und ein Magnetgehäuse 12 umfaßt. Die Trägheitsmasse ist durch eine Veränderung der Masse des Magnetgehäuses 12 variierbar. Dadurch und durch die ebenfalls variabel gestalteten Federelemente 5 kann die Eigenfrequenz des Schwingungstilgers 1 auf einen gewünschten Wert festgelegt werden. Der Topfmagnet 7 umschließt eine Tauchspule 6 radial innen- und außenseitig, wobei die Tauchspule 6 relativ unbeweglich an der Tragplatte 4 befestigt ist. Die Tauchspule 6 ist jeweils mit einem hier nicht dargestellten Anschluß versehen und durch eine Versorgungseinheit mit Wechselstrom beaufschlagbar. Die Tauchspule 6 ist parallel zur Bewegung 2 des Maschinenteils 3 angeordnet, wobei der Topfmagnet 7 durch ein Federelement 5 an der Tragplatte 4 schwingfähig festgelegt ist. Durch die Ansteuerung der Tauchspule 6 können die in das Maschinenteil 3 eingeleiteten Schwingungen reduziert oder durch Einleitung einer Gegenschwingung getilgt werden. In Abhängigkeit von der Schwingung des Maschinenteils 3 wird ein Wechselstrom in die Tauchspule 6 eingeleitet, so daß eine Kraft zwischen dem Topfmagnet 7 und der Tragplatte 4 entsteht, die sich in axialer Richtung an den einander benachbarten, schwingfähig zueinander aufgehängten Teilen abstützt.

In Fig. 1 besteht der Topfmagnet 7 aus dem Magnetgehäuse 12 und dem Magnet 11, der als in radialer Richtung magnetisierter Ringmagnet 13 ausgebildet ist. Das Magnetgehäuse 12 ist im Bereich seines Außenumfangs durch eine Preßpassung 20 mit dem Randbereich 21 der Tragplatte 4 verbunden, wobei die Tragplatte 4 und der Randbereich 21 durch das Federelement 5 aus elastomerem Werkstoff miteinander verbunden sind. Geführt wird der Topfmagnet 7 im Bereich seines Innenumfangs durch einen axialen Vorsprung 19, der rohrförmig ausgebildet und relativ unbeweglich an der Tragplatte 4 befestigt ist. Der Vorsprung 19 ist im Bereich seines Außenumfanges mit einer reibungsverringernden Oberflächenbeschichtung 18 versehen, um das Ansprechverhalten des Schwingungstilgers 1 bei Einleitung von Wechselströmen zu verbessern.

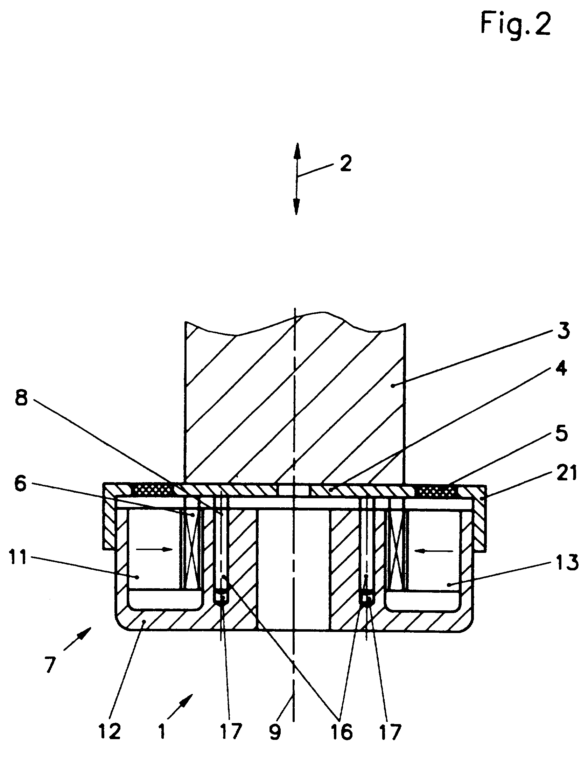

In Fig. 2 ist ein Ausführungsbeispiel gezeigt, bei dem die Führung 8 durch gleichmäßig in Umfangsrichtung verteilte Führungsbolzen gebildet ist, die mit der Tragplatte 4 verbunden und jeweils in Ausnehmungen 17 des Magnetgehäuses 12 geführt sind. Die Führungsbolzen 16 können in diesem Ausführungsbeispiel aus einer geeigneten Legierung bestehen, so daß es eines sekundären Schmiermittels zur Reibungsverringerung bei Relativbewegungen des Topfmagnets 7 zum Maschinenteil 3 nicht bedarf. Auch in diesem Ausführungsbeispiel ist der Magnet 11 durch einen radial magnetisierten Ringmagnet 13 gebildet. In der Wirkungsweise unterscheidet sich das hier dargestellte Ausführungsbeispiel von dem Ausführungsbeispiel aus Fig. 1 nicht.

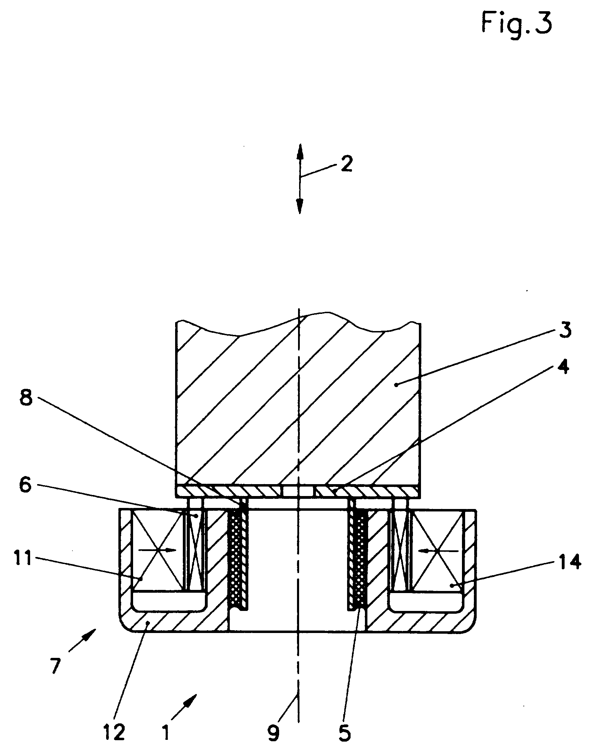

In Fig. 3 ist eine Ausführungsbeispiel des erfindungsgemäßen Schwingungstilgers 1 gezeigt, bei dem das Federelement 5 aus elastomerem Werkstoff besteht und im Bereich des Außenumfangs des Vorsprungs 19 angeordnet ist. In radialer Richtung außenseitig wird das Federelement 5 von dem Magnetgehäuse 12 des Topfmagnets 7 umfangsseitig umschlossen, wobei das Federelement 5 adhäsiv oder reibschlüssig innerhalb des Spalts zwischen dem Vorsprung 19 und dem Magnetgehäuse 12 angeordnet ist. Ein derart angeordnetes Federelement 5 bewirkt zusätzlich zu der federnden Abstützung des Topfmagnets 7 gegenüber der Tragplatte 4 eine Dämpfung der Relativbewegungen zwischen dem Magnet 11 und der Tauchspule 6. Beim Durchlaufen von Resonanzbereichen treten daher keine unzulässigen Resonanzüberhöhungen auf. Ein Anschlagen des Magnetgehäuses 12 in axialer Richtung an die benachbarte Tragplatte 4 wird dadurch zuverlässig vermieden. In diesem Ausführungsbeispiel ist der Magnet 11 als Elektromagnet 14 ausgebildet und umschließt die Tauchspule 6 außenumfangsseitig. Angesteuert wird der Elektromagnet 14, ebenso wie die Tauchspule 6, durch eine hier nicht dargestellte Versorgungseinheit. Dem vergleichsweise einfacheren, kostengünstigeren Aufbau eines Schwingungstilgers mit Permanentmagnet gemäß den Fig. 1 und 2 steht bei Verwendung eines Elektromagneten die verbesserte Anpassung der vom Schwingungstilger 1 erzeugten Gegenkraft an die jeweiligen zu bedämpfenden Schwingungen des Maschinenteils 3 gegenüber.

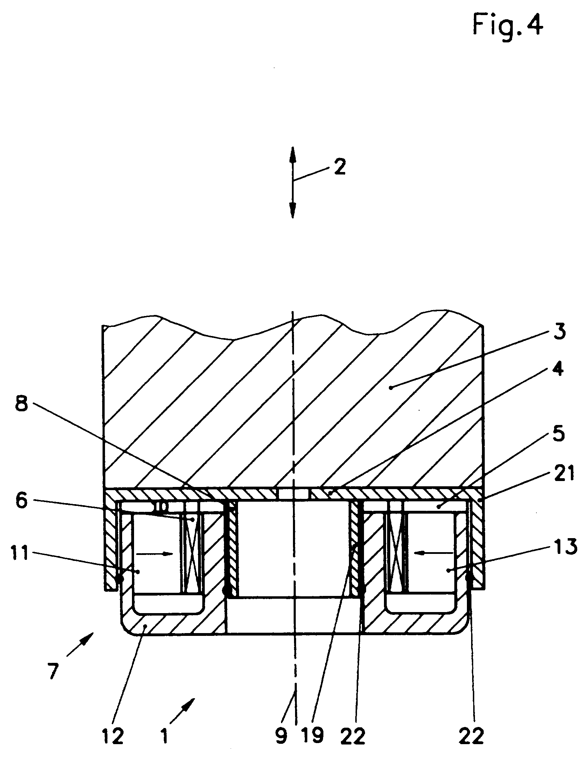

In Fig. 4 ist ein viertes Ausführungsbeispiel des erfindungsgemäßen Schwingungstilgers 1 gezeigt, wobei das Federelement 5 als Luftpolster ausgebildet ist. Um das Luftpolster aufrechtzuerhalten, und um das Eindringen von Staub oder Feuchtigkeit zu verhindern, werden Dichtungen benötigt, die die Tragplatte 4 mit ihrem Randbereich 21 und ihrem Vorsprung 19 gegenüber dem relativ beweglichen Topfmagnet 7, bestehend aus einem radial magnetisierten Permanentmagnet 13 und dem Magnetgehäuse 12 abdichten. Die Dichtungen sind in diesem Ausführungsbeispiel schematisch dargestellt und durch zwei O-Ringdichtungen 22 gebildet. Sie sind im axialen Randbereich 21 und am Außenumfang des Vorsprungs 19 in einer Dichtungsnut angeordnet. Die angrenzenden Oberflächen des Magnetgehäuses 12 sind derart beschaffen, daß die O-Ringdichtungen 22 während der bestimmungsgemäßen Verwendung einem möglichst geringen Verschleiß unterliegen.

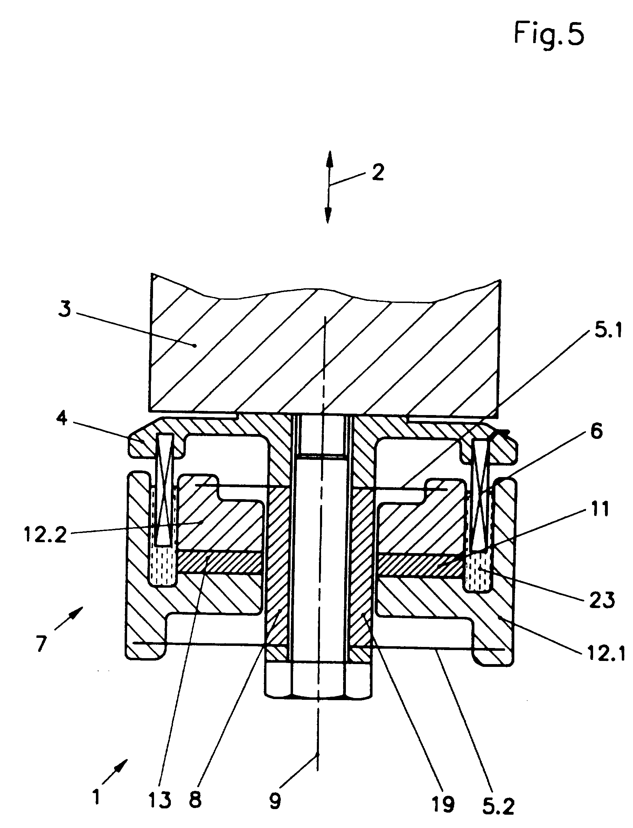

In Fig. 5 ist ein fünftes Ausführungsbeispiel gezeigt, wobei der Topfmagnet 7 aus einem Magnet 11 und einem Magnetgehäuse 12 besteht. Der Magnet 11 ist als in axialer Richtung magnetisierter Permanentmagnet ausgebildet, wobei das Magnetgehäuse 12 aus zwei Magnetkörpern 12.1, 12.2 besteht. Der scheibenförmige Permanentmagnet kann in wirtschaftlicher Hinsicht besonders kostengünstig hergestellt werden. In diesem Ausführungsbeispiel besteht das Federelement 5 aus zwei Metallmembranen 5.1, 5.2. Die Metallmembranen 5.1, 5.2 sind jeweils mit einem der Magnetkörper 12.1, 12.2 verbunden und in einem in axialer Richtung mehrteiligen Vorsprung 19 eingespannt. Die Verwendung der beiden Metallmebranen 5.1, 5.2 hat den Vorteil, daß eventuell betriebsbedingt auftretende radiale Belastungen von den Federelementen 5 aufgefangen werden. Die Metallmembrane 5.1, 5.2 bedingen eine besonders gute, reibungsfreie radiale Abstützung und axiale Führung, so daß es zusätzlicher Gleitflächen zwischen dem Topfmagnet 7 und dem Vorsprung 19 nicht bedarf.

Zur Erhöhung der Dämpfung können die Spalte der in den Fig. 1 bis 5 dargestellten Topfmagneten 7 mit einem viskosen Medium 23 gefüllt sein, so daß bei einer Relativbewegung zwischen der Tauchspule 6 und dem Topfmagnet 7 eine viskose Dämpfung entsteht.

## Patentansprüche

1. Aktiver Schwingungstilger für ein in einer hin- und hergehenden Bewegung befindliches Maschinenteil, umfassend eine in Richtung der hin- und hergehenden Bewegung verschiebbare Trägheitsmasse, die eine tilgungswirksame Zusatzmasse bildet, sowie eine an dem Maschinenteil festlegbare Tragplatte, wobei die Trägheitsmasse und die Tragplatte durch ein Federelement miteinander verbunden sind, die Eigenfrequenz des Schwingungssystems, das aus der Trägheitsmasse und dem Federelement (5) gebildet ist, höchstens so groß ist, wie die Frequenz der hin- und hergehenden Bewegung (2), die Trägheitsmasse durch eine an der Tragplatte (4) relativ unbeweglich festgelegte Tauchspule (6) bewegbar ist, das Federelement (5) durch die Tauchspule (6) verformbar ist, die Trägheitsmasse durch einen Topfmagnet (7) gebildet ist, der die Tauchspule (6) radial innen und außen zumindest teilweise konzentrisch umschließt und der Topfmagnet (7) durch eine Führung (8) parallel zur Achse (9) der Tauchspule (6) geführt ist.

2. Schwingungstilger nach Anspruch 1, dadurch gekennzeichnet, daß das Federelement (5) aus einem elastomeren Werkstoff besteht.

3. Schwingungstilger nach Anspruch 1, dadurch gekennzeichnet, daß das Federelement (5) durch ein Luftpolster (10) gebildet ist, das von der Tragplatte (4) und dem Topfmagnet (7) umschlossen ist.

4. Schwingungstilger nach Anspruch 3, dadurch gekennzeichnet, daß der Topfmagnet (7) und die in axialer Richtung relativ bewegliche Tragplatte (4) gegeneinander abgedichtet sind.

5. Schwingungstilger nach Anspruch 1 bis 4, dadurch gekennzeichnet, daß der Topfmagnet (7) aus einem Magnet (11) und einem Magnetgehäuse (12) besteht und daß der Magnet (11) relativ unbeweglich im Magnetgehäuse (12) festgelegt ist.

6. Schwingungstilger nach Anspruch 5, dadurch gekennzeichnet, daß der Magnet (11) als permanent magnetisierter Ringmagnet (13) ausgebildet ist und daß der Ringmagnet (13) in radialer Richtung magnetisiert ist.

7. Schwingungstilger nach Anspruch 5, dadurch gekennzeichnet, daß der Magnet (11) durch einen in axialer Richtung magnetisierten Permanentmagnet gebildet ist, der vom Magnetgehäuse (12) unter Bildung eines Luftspalts zumindest teilweise umschlossen ist und daß das Magnetgehäuse (12) aus zwei Magnetkörpern (12.1, 12.2) besteht, die dem Permanentmagnet in Richtung der Bewegung (2) beiderseits benachbart zugeordnet sind.

8. Schwingungstilger nach Anspruch 7, dadurch gekennzeichnet, daß die Magnetkörper (12.1, 12.2) jeweils durch ein Federelement (5) aus metallischem Werkstoff mit einem sich in axialer Richtung erstreckenden zylindrischen Vorsprung (19) der Tragplatte (4) elastisch nachgiebig verbunden sind.

9. Schwingungstilger nach Anspruch 8, dadurch gekennzeichnet, daß der Vorsprung (19) als Führungshülse ausgebildet ist und daß die Magnetkörper (12.1, 12.2) auf der Führungshülse relativ beweglich abgestützt sind.

10. Schwingungstilger nach Anspruch 5, dadurch gekennzeichnet, daß der Magnet (11) als Elektromagnet (14) ausgebildet ist.

11. Schwingungstilger nach Anspruch 1 bis 10, dadurch gekennzeichnet, daß der Topfmagnet (7) kreisringförmig und in sich geschlossen ausgebildet ist.

12. Schwingungstilger nach Anspruch 1 bis 10, dadurch gekennzeichnet, daß der Topfmagnet (7) aus in Umfangsrichtung verteilten Segmenten besteht.

13. Schwingungstilger nach Anspruch 1, dadurch gekennzeichnet, daß die Führung (8) relativ unbeweglich zur Tragplatte (4) angeordnet ist und das Magnetgehäuse (12) mit Gleitflächen (15) anliegend berührt.

14. Schwingungstilger nach Anspruch 13, dadurch gekennzeichnet, daß die Führung (8) durch zumindest zwei gleichmäßig in Umfangsrichtung verteilte Führungsbolzen (16) gebildet ist, die von hohlzylinderförmigen Ausnehmungen (17) im Magnetgehäuse (12), die sich parallel zur Achse (9) der Tauchspule (6) erstrecken, umschlossen sind.

15. Schwingungstilger nach Anspruch 13 bis 14, dadurch gekennzeichnet, daß zumindest eines der die Führung (8) bildenden Teile mit einer reibungsverringernden Oberflächenbeschichtung (18) versehen ist.

16. Schwingungstilger nach Anspruch 1 bis 15, dadurch gekennzeichnet, daß das Federelement (5) als Führungs- und Dämpfungsbuchse ausgebildet ist und in radialer Richtung zwischen dem Magnetgehäuse (12) und einem sich in axialer Richtung erstreckenden hohlzylindrischen Vorsprung (19) der Tragplatte angeordnet ist.

17. Schwingungstilger nach Anspruch 1 bis 16, dadurch gekennzeichnet, daß der Topfmagnet (7) im Bereich der die Tauchspule (6) umschließt, mit einem viskosen Medium (23) gefüllt ist und daß das Medium (23) innerhalb des Topfmagnets (7) dichtend gehalten ist.

## Claims

1. An active vibration damper for a machine part which is in reciprocating motion, comprising an inertia mass which is displaceable in the direction of the reciprocating motion and forms an additional mass which is effective in terms of damping, and comprising a bearing plate which can be fixed on the machine part, the inertia mass and the bearing plate being connected to one another by means of a spring element, the natural frequency of the vibration system formed from the inertia mass and the spring element (5) being at the most as high as the frequency of the reciprocating motion (2), the inertia mass being movable by means of a plunger (6) which is fixed so as to be relatively immobile on the bearing plate (4), the spring element (5) being deformable by means of the plunger (6), the inertia mass being formed by a pot magnet (7) which surrounds the plunger (6) radially on the inside and on the outside at least partially concentrically, and the pot magnet (7) being guided by means of a guide (8) parallel to the axis (9) of the plunger (6).

2. A vibration damper according to claim 1, characterized in that the spring element (5) consists of an elastomeric material.

3. A vibration damper according to claim 1, characterized in that the spring element (5) is formed by an air cushion (10) which is surrounded by the bearing plate (4) and the pot magnet (7).

4. A vibration damper according to claim 3, characterized in that the pot magnet (7) and the bearing plate (4), which is relatively movable in the axial direction, are sealed off relative to one another.

5. A vibration damper according to any of claims 1 to 4, characterized in that the pot magnet (7) comprises a magnet (11) and a magnet housing (12), and in that the magnet (11) is fixed so as to be relatively immobile in the magnet housing (12).

6. A vibration damper according to claim 5, characterized in that the magnet (11) is designed as a permanently magnetizable annular magnet (13), and in that the annular magnet (13) is magnetized in the radial direction.

7. A vibration damper according to claim 5, characterized in that the magnet (11) is formed by a permanent magnet which is magnetized in the axial direction and is at least partially surrounded by the magnet housing (12) forming an air gap, and in that the magnet housing (12) comprises two magnet bodies (12.1, 12.2) which are arranged adjacently on both sides of the permanent magnet in the direction of motion (2).

8. A vibration damper according to claim 7, characterized in that the magnet bodies (12.1, 12.2) are respectively connected in an elastically resilient manner by a spring element (5) made of metallic material to a cylindrical projection (19) of the bearing plate (4) extending in the axial direction.

9. A vibration damper according to claim 8, characterized in that the projection (19) is designed as a guide sleeve, and in that the magnet bodies (12.1, 12.2) are supported so as to be relatively movable on the guide sleeve.

10. A vibration damper according to claim 5, characterized in that the magnet (11) is designed as an electromagnet (14).

11. A vibration damper according to any of claims 1 to 10, characterized in that the pot magnet (7) is designed to be circular and to be closed in itself.

12. A vibration damper according to any of claims 1 to 10, characterized in that the pot magnet (7) comprises segments distributed in the circumferential direction.

13. A vibration damper according to claim 1, characterized in that the guide (8) is arranged so as to be immobile relative to the bearing plate (4) and touches the magnet housing (12), bearing against it with sliding surfaces (15).

14. A vibration damper according to claim 13, characterized in that the guide (8) is formed by at least two guide bolts (16) which are distributed evenly in the circumferential direction and are surrounded by hollow-cylindrical recesses (17) in the magnet housing (12) which extend parallel to the axis (9) of the plunger (6).

15. A vibration damper according to either of claims 13 and 14, characterized in that at least one of the parts forming the guide (8) is provided with a friction-reducing surface coating (18).

16. A vibration damper according to any of claims 1 to 15, characterized in that the spring element (5) is designed as a guide and damping bush and is arranged in the radial direction between the magnet housing (12) and a hollow-cylindrical projection (19) of the bearing plate extending in the axial direction.

17. A vibration damper according to any of claims 1 to 16, characterized in that the pot magnet (7) is filled with a viscous medium (23) in the region which surrounds the plunger (6), and in that the medium (23) is held in a sealing manner inside the pot magnet (7).

## Revendications

1. Amortisseur d'oscillations pour un organe de machine placé dans un mouvement de va-et-vient, comportant une masse d'inertie déplaçable dans le sens du mouvement de va-et-vient, laquelle forme une masse additionnelle à effet amortissant, ainsi qu'une plaque d'appui susceptible d'être fixée à l'organe de machine, la masse d'inertie et la plaque d'appui étant reliées entre elles par un élément élastique, la fréquence propre du système d'oscillations formé par la masse d'inertie et l'élément élastique (5) étant au maximum aussi grande que la fréquence du mouvement de va-et-vient (2), la masse d'inertie étant déplaçable par une bobine mobile (6) fixée de manière relativement immobile sur la plaque d'appui (4), l'élément élastique (5) étant déformable par la bobine mobile (6), la masse d'inertie étant formée par un aimant cuirassé (7) enveloppant la bobine mobile (6) radialement, à l'intérieur et à l'extérieur, au moins partiellement concentriquement et l'aimant cuirassé (7) étant guidé par un dispositif de guidage (8) dans un sens parallèle à l'axe (9) de la bobine mobile (6).

2. Amortisseur d'oscillations selon la revendication 1, caractérisé en ce que l'élément élastique (5) est en un matériau élastomère.

3. Amortisseur d'oscillations selon la revendication 1, caractérisé en ce que l'élément élastique (5) est formé par un coussin d'air (10) qui est enveloppé par la plaque d'appui (4) et l'aimant cuirassé (7).

4. Amortisseur d'oscillations selon la revendication 3, caractérisé en ce que l'aimant cuirassé (7) et la plaque d'appui (4) relativement mobile dans le sens axial sont rendus étanches l'un par rapport à l'autre.

5. Amortisseur d'oscillations selon l'une quelconque des revendications 1 à 4, caractérisé en ce que l'aimant cuirassé (7) se compose d'un aimant (11) et d'un boîtier d'aimant (12) et en ce que l'aimant (11) est fixé de manière relativement immobile dans le boîtier d'aimant (12).

6. Amortisseur d'oscillations selon la revendication 5, caractérisé en ce que l'aimant (11) est conçu sous forme d'aimant annulaire (13) à aimantation permanente et en ce que l'aimant annulaire (13) est aimanté dans le sens radial.

7. Amortisseur d'oscillations selon la revendication 5, caractérisé en ce que l'aimant (11) est formé par un aimant permanent aimanté dans le sens axial, lequel est enveloppé au moins partiellement par le boîtier d'aimant (12) en formant un entrefer et en ce que le boîtier d'aimant (12) se compose de deux corps aimantés (12.1, 12.2) affectés à l'aimant permanent de manière contiguë, de part et d'autre, dans le sens du mouvement (2).

8. Amortisseur d'oscillations selon la revendication 7, caractérisé en ce que les corps aimantés (12.1, 12.2) sont reliés chacun par un élément élastique (5) en matériau métallique de manière souple à une saillie (19) cylindrique de la plaque d'appui (4), s'étendant dans le sens axial.

9. Amortisseur d'oscillations selon la revendication 8, caractérisé en ce que la saillie (19) est conçue sous forme de douille de guidage et en ce que les corps aimantés (12.1, 12.2) s'appuient de manière relativement mobile sur la douille de guidage.

10. Amortisseur d'oscillations selon la revendication 5, caractérisé en ce que l'aimant (11) est conçu sous forme d'électro-aimant (14).

11. Amortisseur d'oscillations selon l'une quelconque des revendications 1 à 10, caractérisé en ce que l'aimant cuirassé (7) est conçu sous forme d'anneau de cercle et est entièrement fermé.

12. Amortisseur d'oscillations selon l'une quelconque des revendications 1 à 10, caractérisé en ce que l'aimant cuirassé (7) se compose de segments répartis dans le sens circonférentiel.

13. Amortisseur d'oscillations selon la revendication 1, caractérisé en ce que le dispositif de guidage (8) est disposé de manière relativement immobile par rapport à la plaque d'appui (4) et adhère au boîtier d'aimant (12) avec des surfaces de glissement (15).

14. Amortisseur d'oscillations selon la revendication 13, caractérisé en ce que le dispositif de guidage (8) est formé par au moins deux tourillons de guidage (16) répartis uniformément dans le sens circonférentiel, lesquels sont enveloppés par des creux (17) en forme de cylindre creux dans le boîtier d'aimant (12), s'étendant parallèlement à l'axe (9) de la bobine mobile (6).

15. Amortisseur d'oscillations selon l'une des revendications 13 et 14, caractérisé en ce qu'au moins l'un des éléments formant le dispositif de guidage (8) est pourvu d'un revêtement de surface (18) réduisant la friction.

16. Amortisseur d'oscillations selon l'une quelconque des revendications 1 à 15, caractérisé en ce que l'élément élastique (5) est conçu sous forme de douille de guidage et d'amortissement et est disposé dans le sens radial entre le boîtier d'aimant (12) et une saillie (19) de la plaque d'appui, ayant la forme d'un cylindre creux et s'étendant dans le sens axial.

17. Amortisseur d'oscillations selon l'une quelconque des revendications 1 à 16, caractérisé en ce que l'aimant cuirassé (7) est rempli dans la partie enveloppant la bobine mobile (6) d'un milieu (23) visqueux et en ce que le milieu (23) est maintenu de manière étanche à l'intérieur de l'aimant cuirassé (7).
